# FASCICULE DE BREVET EUROPEEN

(11) **EP 2 983 486 B1**
(45) Date de publication et mention de la délivrance du brevet: **05.04.2017**
(21) Numéro de dépôt: 14728359.2
(22) Date de dépôt: 19.03.2014
(51) Int. Cl.: A23D 7/005, A23D 7/02, A23L 23/00, A23L 35/00, A23G 1/32, A23G 1/36, A23G 1/50, A23G 1/56

(54) **PRODUIT TARTINABLE COMPRENANT UNE PHASE GRASSE COMPRENANT UNE HUILE NON HYDROGÉNÉE ET NON INTER-ESTÉRIFIÉE ET PROCÉDÉ DE PRÉPARATION**
STREICHFÄHIGES PRODUKT MIT EINER FETTPHASE MIT EINEM NICHTHYDRIERTEN UND NICHTVERESTERTEN ÖL UND HERSTELLUNGSVERFAHREN
SPREADABLE PRODUCT COMPRISING A FATTY PHASE THAT COMPRISES A NON-HYDROGENATED AND NON-INTERESTERIFIED OIL AND PREPARATION PROCESS

(30) Priorité: 25.03.2013 FR 1352669; 07.03.2014 TN 2014000099
(43) Date de publication de la demande: 17.02.2016
(73) Titulaire: JAMEL, Mohamed Ali, 2040 Rades (TN)
(72) Inventeur: JAMEL, Mohamed Ali, 2040 Rades (TN)
(74) Mandataire: Domange, Maxime
(86) Numéro de dépôt international: PCT/TN2014/000002
(87) Numéro de publication internationale: WO 2014/158105

(56) Documents cités:
- WO-A1-2010/076318
- AU-A1- 2005 244 561
- FR-A1- 2 943 891
- US-A- 3 519 436
- US-A1- 2007 190 186

## Description

### Domaine technique

La présente invention concerne un produit de nature tartinable solide sous forme de bloc dur à température ambiante, notamment de 20 à 30°C, et comprenant une phase grasse comprenant une huile non hydrogénée et non inter-estérifiée riche en acide gras insaturés et un procédé de préparation. Le produit obtenu présente des utilisations dans l'industrie alimentaire, cosmétique voire pharmaceutique.

### Etat de l'Art

Le beurre et la margarine sont les deux principaux corps gras solides tartinables connus de nos jours pour leurs larges applications ménagères et dans l'industrie alimentaire.

Le beurre est une émulsion composée au minimum de 82% de matières grasses d'origine laitière et au maximum 16% d'eau sous forme de petites gouttelettes. Il est fabriqué à partir de la crème du lait que l'on bat. Le beurre est riche en acides gras saturés (67%) et en cholestérol, lesquels composés sont en relation avec l'hypercholestérolémie et les risques de maladies cardiovasculaires (Lichtenstein et *al*. (1), 2003; Kris-Etherton et *al*., 1993 (2)).

En outre, le beurre a une durée de conservation limitée. Il est sensible à la réaction d'oxydation par l'oxygène de l'air qui dégrade ses composants, l'oxydation étant encore plus rapide sous l'effet des rayons ultraviolets ou de la chaleur. Le beurre est alors rance avec un goût et une odeur généralement jugés désagréables. Pour limiter le rancissement, le beurre doit donc être conservé au réfrigérateur dans un emballage fermé, à l'abri de l'air et de la lumière.

La margarine est aussi un corps gras alimentaire solide sous forme d'émulsion, d'eau dans l'huile composée de 82% de matières grasses et de 16% d'eau au maximum et au moins 2% d'agent émulsifiant comme les mono et diglycérides et agent antioxydant notamment les vitamines A et E. Mais, à la différence du beurre, elle est fabriquée à partir de matière grasse d'origine végétale. La margarine est produite à partir d'huiles végétales hydrogénées. L'opération d'hydrogénation permet de saturer les doubles liaisons par des molécules d'hydrogène simples, ainsi les huiles se solidifient, puisque le point de fusion des acides gras saturés est nettement supérieur à celui des acides gras insaturés (Chene, 2007 (4)). Au cours du procédé d'hydrogénation certaines doubles liaisons acquièrent une configuration trans à certaines doubles liaisons ce qui modifie les qualités nutritionnelles des huiles (Norris, 2005 (7); Henriksen, 1994 (5)).

Concernant les caractéristiques de conservation, la margarine se conserve une douzaine de semaines au réfrigérateur grâce à l'adjonction d'additifs antioxydants qui retardent le processus de rancissement lié à l'action conjointe de la lumière, de l'air et de la chaleur notamment le β-carotène E160 et l'α-tocopherol E 307, alors que le beurre ne se conserve que 3 à 5 semaines au réfrigérateur.

Pour réduire les risques de maladies cardiovasculaires et d'hypercholestérolémie, il est nécessaire de limiter la consommation des acides gras saturés et ceux ayant la configuration trans (Ascherio et *al*., 1998 (3); Lockheart et *al*., 2007 (8)).

Ainsi, la consommation d'une huile riche en acide gras mono-insaturé, telle que l'huile d'olive vierge, est une excellente méthode de prévention des maladies cardio-vasculaires (Roche et *al.*, 2000) (6). Mais, son état fluide limite sa consommation.

Dans le brevet FR 2415429 (A1), on décrit un produit butyreux comestible solide tartinable constitué d'un mélange de beurre (crème séparée de lait de vache) et d'huile végétale, de préférence huile de soja. On connait, notamment dans le brevet TN 2010/0036, un produit tartinable solide obtenu par mélange d'une huile d'olive alimentaire et de beurre de cacao ou de ses substituant. Bien que ces produits soient solides et tartinables, ils présentent l'inconvénient de contenir des acides gras saturés provenant du beurre de cacao d'un point de fusion inférieur à 20°C, doivent donc être maintenus au froid pour conserver la texture solide.

Dans le brevet FR 2660160, on décrit un corps gras alimentaire tartinable en sortie de réfrigérateur comprenant une phase aqueuse dispersée dans une phase grasse. La phase grasse comprend une graisse concrète, solide à température ambiante constituée d'un mélange d'huiles comprenant 5-50% de préférence 15-30% d'huiles contenant des acides gras saturés comme l'huile de coprah, l'huile de palme, beurre de karité et autres beurres.

Dans le brevet FR 2943891, on décrit un gel alimentaire du type mayonnaise qui conserve une viscosité suffisante pour s'écouler par l'orifice d'un récipient à température ambiante. Ce produit est obtenu par dissolution de cire d'abeille, éventuellement complétée par de la cire de candellila ou de carnauba dans de l'huile. Dans les exemples 1 à 5 la cire d'abeille est présente en une proportion pondérale de moins de 5%. En fait, pour une concentration de cire d'abeille supérieure à 3%, on révèle une sensation farineuse dans la bouche avec dénaturation du gout naturel de l'huile et apparition d'un gout de caoutchouc. En outre, pour une concentration de 5% de cire d'abeille, il y a dénaturation de la couleur naturelle de l'huile d'olive et transformation de la couleur du, produit en une masse blanche avec de surcroît, apparition des formes géométriques diverses à la surface du bloc. Or, pour obtenir un produit plus solide comme une margarine comme à l'exemple 6 , il est nécessaire de mettre en oeuvre 5°% de cire d'abeille et ainsi qu'une serie d'agents épaississants en proportion élevée au moins 3%, mais ce produit doit être conservé au frais pour éviter le relargage de l'huile dû à la fonte du gel car son point de fusion est inférieur à 30°C. C'est pourquoi dans FR 2943891, seul des gels de type mayonnaise sont revendiqués.

Le but de la présente invention est fournir une composition tartinable sous forme de bloc solide à température ambiante, résultant à base d'huile riche en acide gras insaturés, notamment oléique, linolénique et linoléique et cumulant les caractéristiques suivantes:
- Une teneur maximale d'huile exclusivement constituée d'huile fluide riche en acides gras insaturés, notamment oléique, linolénique et linoléique tel que l'huile d'olive,
- sans corps gras de type graisse végétale solide à température ambiante comprenant des acides gras saturés et ou hydrogénés et interestérifiés (de type huile de palme ou autre),
   - pouvant conserver le gout et la couleur de ladite huile, notamment l'huile d'olive le cas échéant, et
   - dépourvu de goût autre provenant des autres composants de la composition, et
   - dépourvue de sensation farineuse provenant d'agent gélifiant ou autre, et
   - présentant un point de fusion supérieur à 30°C.

L'inventeur a découvert que l'on pouvait fabriquer un tel produit tartinable sous forme de bloc solide à température ambiante à partir d'un mélange d'une dite huile riche en acides gras insaturés, notamment oléique, linolénique et linoléique tel que l'huile d'olive et de cire alimentaire choisie parmi les cires microcristallines.

Plus précisément, la présente invention fournit un produit alimentaire sous forme de bloc solide à température ambiante et tartinable comprenant une phase grasse fluide constituée d'huile alimentaire non hydrogénée et non inter-estérifiée comprenant au moins 75%,de préférence au moins 85% d'acides gras insaturés, de préférence encore en C16-C20, en mélange avec au moins une cire ou mélange de cires comprenant au moins une cire minérale choisie parmi les cires microcristallines, la proportion de dite(s) cire(s) dans la dite phase grasse étant de préférence de 1 à 10%.

Les cires microcristallines sont plus particulièrement constituées essentiellement d'hydrocrabures iso-paraffiniques et naphténiques, notamment des iso-praffines en C20 à C40 de masses moléculaires de 450 à 1000. Les cires microcristallines se caractérisent par des particules plus fines que les cires végétales ou animales, notamment de 100 à 350 µm, de préférence de 160 à 220 µm et présente plus particulièrement une pénétration à l'aiguille à 20°C selon le test ASTM D1321 d'au moins 8, de préférence de 9 à 15 et une température de fusion de 60 à 100°C, plus particulièrement de 85-95°C, supérieure à celle des cires végétales ou animales.

La cire anciennement connue sous l'appellation ozokérite est inclue dans cette définition de cire microcristalline.

L'utilisation des dites cires en mélange avec une telle huile telle que l'huile d'olive confère un produit fini sous forme de bloc solide tartinable présentant un degré de dureté variable selon la nature et la teneur de cire utilisée et ce aussi bien en absence de phase aqueuse que sous forme d'émulsion avec une phase aqueuse du type margarine.

La présente invention fournit donc une phase grasse gras qui, tout en totalement dépourvu d'huile hydrogénée et/ou inter-estérifiée, présente néanmoins la consistance requise pour constituer notamment une huile d'olive sous forme de bloc solide tartinable (beurre d'huile d'olive) dont le point de fusion est nettement supérieur à 30°C ou une margarine (en présence d'une phase aqueuse) sans apporter de modification structurale sur les acides gras insaturés présents dans l'huile à l'état initial.

Plus particulièrement, l'utilisation de la cire ozokérite ou microcristalline comme agent pour la solidification de l'huile d'olive présente les avantages suivants :
- l'huile d'olive conserve sa couleur et son arôme d'origine sans altération même à des concentrations élevée en cire qui dépassent 10%,
- Absence de sensation farineuse dans la bouche même à des concentrations élevée en cire qui dépassent 10%,
- La surface du bloc, solide, homogène obtenu est lisse présentant un aspect à la fois tranchant et tartinable, avec absence de fissures,
- Obtention d'un bloc solide ne coulant pas à 20°C, à partir de seulement 1% de cire et 99% d'huile,
- Obtention d'un bloc solide à 20°C, à partir de 2% de cire et 98% d'huile,
- Obtention d'un bloc solide et dur à 30°C, à partir de 3% de cire et 97% d'huile,
- la température de démarrage de la fusion du bloc solide tartinable est supérieure à 30°C pour une concentration en cire supérieure à 4%.

De préférence, ladite phase grasse comprend dits acides gras insaturés en C16 à C20, comprenant plus de 55% d'acide gras choisis parmi les acides oléique, linoléique et linolénique, de préférence au moins 55% d'acide oléique, au moins 10% d'acide linoléique, et au moins 0.5% d'acide linolénique.

Plus particulièrement les huiles végétales suivantes sont utilisables :

| | Acides gras insaturés | | | | | Acides gras saturés | |
|---|---|---|---|---|---|---|---|
| | Acide oléique % | Acide linoléique % | Acide linolénique % | Acide eïcosénoique | Acide docosénoique | Acide palmitique % | Acide Stéarique % |
| Huile de tournesol | 19 | 67 | 0.6 | | | 6 | 5 |
| Huile de mais | 28 | 54 | 1.6 | | | 10.5 | 1.9 |
| Huile d'avocat | 60 | 12 | 5 | | | 15 | 1.5 |
| Huile de colza | 58 | 22 | 9 | | | 6 | 2 |
| Huile de soja | 23 | 50 | 7 | | | 11 | 4 |
| Huile de noisette | 72 | 18 | 0.6 | | | 6 | 2 |
| Huile de noix | 23 | 55 | 13 | | | 7 | 2 |
| Huile de cacahouète | 47 | 34 | 0.6 | | | 10 | 3 |
| Huile de carthame | 14 | 74 | 0.2 | | | 6.5 | 2.4 |
| Huile de coton | 23 | 54 | 1 | | | 22 | 2 |
| Huile de sons de riz | 42.5 | 39 | 1.1 | | | 15 | 1.9 |
| Huile de lin | 25 | 18 | 60 | | | 6 | 6 |
| Huile de sésame | 45 | 44 | 1 | | | 9 | 6 |
| Huile de germe de blé | 18 | 57 | 6 | | | 15 | 4 |
| Huile de jojoba | 11 | | | 68 | 17 | | |
| Huile d'argane | 43 | 36 | 0.25 | | | 12.6 | 5.9 |
| Huile d'olive | 65 | 16 | 0.9 | | | 9 | 3 |

De préférence, ladite huile est une huile végétale choisie parmi les huile d'olive, huile de tournesol, huile d'avocat, huile de colza, huile de noisette, huile de noix, huile de carthame, huile de lin, huile de germes de blé. Les huiles ci-dessus sont préférées car elles sont plus riches en acides oléique, linoléique et linolénique

De préférence encore, ladite huile est une huile d'olive, de préférence vierge.

Une huile d'olive vierge se caractérise notamment par les caractéristiques suivantes :
- teneur en alcools aliphatiques inférieur à 300ppm
- teneur en stigmastadiène inférieure à 0,10mg/kg
- teneur en érythrodiol est inférieur à 4.5%,
- absorbance dans l'ultraviolet K270nm (extinction spécifique à À= 270 nm) inférieure à 0.10 pour une variation de l'extinction spécifique ΔK inférieure ou égale à 0.01 avec ΔK = K270-½ (K266-K274).

L'oxydation d'un corps gras conduit à la formation de diènes et triènes conjugués qui absorbent à la longueur d'onde : 270 nm. L'examen spectrophotométrique dans l'ultraviolet peut donc fournir des indications sur la qualité d'une huile, sur son état de conservation et sur les modifications dues aux processus technologiques.

L'examen spectrophotométrique de l'huile d'olive selon la méthode officielle prévoit la détermination de l'extinction spécifique, en solution dans le cyclohexane à la longueur d'onde de 270 nm et la détermination de la variation de l'extinction spécifique (ΔK) exprimée comme suit :ΔK = K270-½ (K266-K274),avecK270=:extinction spécifique à λ= 270 nm;K266=extinction spécifique à λ= 266 nm et K274=extinction spécifique a λ= 274 nm.

Plus particulièrement, ladite phase grasse comprend une dite cire ou mélange de cires dans une proportion pondérale de 1 à 15%, de préférence de 2 à 10%.

De préférence encore, ladite phase grasse comprend une dite cire minérale en mélange avec une cire végétale ou animale, le dit mélange de cires comprenant au moins 50% en poids de dite cire minérale ou fossile, de préférence au moins 2/3 de dite cire minérale, et de préférence la dite cire végétale ou animale est choisie parmi les cire d'abeilles, de préférence cire d'abeille blanche, cire de candelilla, cire de son de riz, et cire de carnauba qui présentent des pouvoirs de cristallisation de l'huile plus élevés par rapport aux autres cires telles que cire de tournesol, cire de jojoba et cire de soja.

Cet ajout de cires végétale et/ou animale permet de donner plus de fermeté au bloc solide obtenu et par conséquent augmenter son point de fusion tout en conservant les qualités sensorielles initiale de l'huile du fait de la proportion majoritaire de dite cire minérale.

Dans un premier mode de réalisation, le produit alimentaire tartinable selon l'invention est constitué essentiellement d'une dite phase grasse comprenant les proportions pondérales suivantes de:
- 90% à 99% d'huile, de préférence de 95 à 99%
- 1% à 10% de cire(s), de préférence de 1 à 7%, et
- 0 à 3% d'additifs lipophiles divers comprenant notamment un composé antioxydant tel que tocophérol et béta carotène.

On notera que la présence d'un agent conservateur n'est pas nécessaire car l'huile s'auto-conserve.

De préférence, le produit alimentaire solide tartinable selon l'invention est constitué essentiellement d'une dite phase grasse comprenant de 3 à 10% de dite(s) cire(s) dont au moins 3% de dite cire minérale et de préférence au moins 1% de dites cire(s) végétale et/ou animale, de préférence encore 4% de dite cire minérale et 2% de dites cire(s) végétale et/ou animale.

Un produit constitué de cette seule phase grasse peut être maintenue solide à une température supérieure à 30°C.

Dans un mode particulier, ledit produit est du type bloc solide de chocolat comprenant une phase grasse avec un mélange de poudres alimentaires et de préférence de lécithine de soja, le mélange de poudres alimentaires comprenant de la poudre de cacao, du sucre glacé, et de la poudre de lait écrémé ou lactosérum en poudre, et poudre de dextrose.

L'innovation dans ce produit consiste en une nouvelle chocolat à tartiner à base d'huile d'olive dépourvue de graisse hydrogénée et de l'huile de palme. Le mélange huile d'olive, cire minérale et poudres alimentaires confère une longue conservation de ce produit à température ambiante. **La lécithine de soja confère une meilleure miscibilité des autres composants entre eux, à une concentration pondérale inférieure à 1%, notamment 0.5%.**

Dans un deuxième mode de réalisation, le produit alimentaire sous forme de bloc solide tartinable selon l'invention est constitué essentiellement d'une émulsion d'une phase aqueuse dans une dite phase grasse en mélange avec un agent émulsifiant, de préférence choisi parmi la lécithine de soja et des mono et di-glycérides.

Plus particulièrement, le produit alimentaire sous forme de bloc solide tartinable selon l'invention constitué essentiellement d'une émulsion comprend une phase grasse dont les proportions pondérales de:
- 70-95% de dite huile, et
- 3 à 15% de préférence 5 à 10% de dite(s) cire(s), et
- 1 à 5 % d'agent émulsifiant.

Plus particulièrement, la dite émulsion sous forme eau dans l'huile comprend au moins 15% de phase aqueuse et au moins 75% de dite phase grasse:

De préférence, la dite phase grasse et/ou dite phase aqueuse comprend au moins un composé antioxydant et/ou une vitamine, de préférence un composé choisi parmi le tocophérol, béta carotène et acide ascorbique.

Plus particulièrement encore, une dite émulsion sous forme eau dans l'huile sous forme de bloc solide de type margarine comprend en proportions pondérales:
- 70% à 80% de la dite huile,
- 5 à 10%de dite(s) cire(s), et
- 1 à 5% d'agent émulsifiant, et
- 15% à 40 %, de la dite phase aqueuse comprenant de 0 à 5% d'agent épaississant tel que xanthane ou carraghénane.

Un produit constitué de cette seule émulsion peut être maintenue sous forme de bloc solide à une température supérieure à 30°C.

Plus particulièrement, on réalise un produit du type margarine à partir d'une dispersion à chaud d'une phase aqueuse dans l'huile d'olive sous forme de bloc solide tartinable décrit ci avant et sous action du froid. La margarine ainsi produite comprend plus particulièrement de 20% à 40% de phase aqueuse notamment du lait écrémé, 0.5 à 2% de lécithine de soja, 2 à 3% d'agent épaississant, 0,5 à 1% de composé antioxydant, et 1 à 2% de mono et diglycéride. L'avantage de cette nouvelle margarine c'est qu'elle est fabriquée exclusivement à partir d'huile d'olive 100% fluide.

Dans certaines variantes de réalisation dudit produit sous forme de dite émulsion, ledit produit est un bloc solide, la dite phase aqueuse comprenant des morceaux broyés de produits alimentaires, de préférence de taille inférieure à 2mm, tels que fruit et/ou légumes, et/ou de la poudre de produits comestibles divers notamment des condiments ou du lait, c'est-à-dire sous forme de poudre dissoute dans la phase aqueuse.

Dans une première variante particulière, ledit produit est du type tapenade, la dite phase aqueuse comprenant des morceaux broyés de olives et de préférence câpre, anchois, ail et du jus de citron.

Dans une deuxième variante particulière, ledit produit est du type pesto et la dite phase aqueuse comprend des morceaux broyés de feuilles d'herbes aromatiques telles que feuilles fraiches de basilic, ainsi que des morceaux broyés de fromage, pignon et ail.

Les produits des deux variantes sont sous forme de bloc solide homogène, uniforme et tartinable dépourvue d'un anneau surnageant d'huile d'olive. L'innovation dans ces produits consiste en une nouvelle texture de tapenade ou pesto. En effet la texture d'une tapenade ou pesto classique se présente en deux phases, une phase solide surmonté par un surnagent huileux. La nouvelle pâte de tapenade ou pesto se compose d'une seule phase solide homogène et tartinable.

La présente invention fournit également, un procédé de préparation d'un produit alimentaire tartinable selon l'invention caractérisé en ce que la dite phase grasse est obtenue en mélangeant les dites huile et dite(s) cire (s) en les portant à la température de fusion la dite cire ou mélange de cires sous agitation, soit à une température de fusion de 60 à 100°C, plus particulièrement de 85 à 95°C.

Plus particulièrement, on prépare un produit constitué essentiellement de la dite phase grasse en refroidissant ensuite le dit mélange liquide de ladite huile et dite(s) cire(s) dans un cristalliseur à surface raclée et à double enveloppes avec circulation d'eau froide à l'intérieur.

Plus particulièrement, on prépare un produit constitué d'une émulsion de phase aqueuse dans une dite phase grasse en réalisant en suite les étapes supplémentaires de :
- ajout d'agent émulsifiant dans la dite phase grasse liquide à chaud ; et
- mélangeant la dite phase grasse liquide à chaud avec la dite phase aqueuse sous agitation, et
- homogénéisation et refroidissement ladite émulsion fine dans un cristalliseur.

Plus particulièrement, l'invention fournit un procédé de fabrication qui conduit à l'obtention d'une huile d'olive sous forme de bloc solide tartinable (beurre d'huile d'olive) après action du froid, de consistance satisfaisante, formé exclusivement d'huiles d'olives naturels non hydrogénés et non inter-estérifiés et qui présente les acides gras essentiels ainsi que l'acide oléique dans des proportion satisfaisante. Le point de fusion de l'huile d'olive tartinable obtenu est supérieur à 30°C.

L'invention plus particulièrement consiste dans le mélange d'une ou plusieurs huiles d'olives alimentaires naturelles (raffinée ou de préférence vierge ou huile de grignon d'olive) avec au moins une cire microcristalline. L'huile d'olive sous forme de bloc solide tartinable (beurre d'huile d'olive) obtenue, présente une texture solide et stable à température ambiante.

Plus particulièrement, la présente invention présente les avantages suivants:

Le procédé de fabrication de l'huile d'olive sous forme de bloc solide tartinable (beurre d'huile d'olive) est simple et économique, il se compose de trois étapes, chauffage, dissolution et refroidissement, ce procédé ne demande pas un appareillage compliqué et couteux comme celui de l'hydrogénation de l'huile.

Le procédé de fabrication de la margarine d'huile d'olive est semblable à celui de la margarine classique. En effet, cette nouvelle méthode de fabrication consiste à une margarine fabriquée seulement à partir d'huile 100% fluide notamment l'huile d'olive.

Dans les deux cas, l'aliment obtenu est sous forme de bloc solide tartinable, il offre donc au consommateur une nouvelle méthode de consommation de l'huile d'olive à l'état naturel aussi une nouvelle margarine à 100% huile d'olive.

L'aliment obtenu tartinable peut être formé essentiellement voire exclusivement par des produits naturels conventionnels et/ou biologiques à savoir l'huile d'olive et des cires minérales alimentaires et végétales ou animale. Cette composition exclusivement naturelle acquiert à l'aliment une stabilité microbiologique pendant au moins une année.

D'autres caractéristiques et avantages de la présente invention ressortiront mieux à la lecture de la description des exemples détaillés de réalisation suivants. Dans les exemples ci-après on a utilisé de l'huile d'olive extra vierge prélevée d'une huilerie dans la région de Benarous et présentant les caractéristiques physicochimiques et la composition en acides gras suivantes:

| **Paramètre** | **Valeur** |
|---|---|
| Acidité libre | 0,22% (exprimé en acide oléique) |
| Indice de peroxyde | 5 (exprimé en méq. d'O2 /kg) |
| Coeff d'extinction atomique (K270) | 0,10 |

| **Composition en acides gras** | **Pourcentage** |
|---|---|
| Acide palmitique C16:0 | 10,34 |
| Acide palmitoléique C16:1 | 0,41 |
| Acide stéarique C18:0 | 3,01 |
| Acide oléique C18:1 | 70,12 |
| Acide linoléique C18:2 | 17,14 |
| Acide a-linolénique C18:3 | 0,94 |
| Acide arachidique C20:0 | 0,51 |

La cire microcristalline (E905ci) utilisée dans présente les caractéristiques suivantes :

| point de fusion (ASTM D938) | 84.0 - 88.0°C |
|---|---|
| Pénétration à l'aiguille (ASTM D1321) | |
| à 20°C | 9-15 (mm x 0.1) |
| à 43°C | 18-35 (mm x 0.1) |

Les autres cires végétales et animale mises en oeuvre présentaient les valeurs de pénétration à l'aiguille suivante :
- cire de carnauba: à 25°C ASTM D1321 : 2 (mm x 0.1), à 43°C ASTM D1321 : 3(mm x 0.1)
- cire de candelilla: à 25°C ASTM D1321: 3 (mm x 0.1),
- cire d'abeille: à 25°C ASTM D1321: 20 (mm x 0.1) ; à 43°C ASTM D1321: 76(mm x 0.1)

Les points de fusions sont les suivants :
- Cire de carnauba : 78°C
- Cire de candallila : 68°C
- Cire d'abeille : 65°C
   1) Le procédé de fabrication de produit à base d'huile d'olive sous forme solide tartinable des exemples 1, 2 et 5 comprend les étapes suivantes résumées dans le diagramme 1 ci-après.

L'huile d'olive extra vierge non hydrogénée et/ou toute autre huile vierge non hydrogénée ainsi que la cire ou mélange de cires, sont chauffés dans un cuiseur sous atmosphère contrôlé de gaz neutre de préférence de l'azote et dépourvue d'oxygène, à une température qui varie de 60 à 85°C selon la température de fusion de la cire ou mélange de cires utilisée. Pour ce faire, on injecte le dit gaz, notamment l'azote dans l'espace entre la surface de l'huile et le couvercle du cuiseur pour faire échapper l'air. La teneur de la cire ou mélange de cires dans le mélange varie de 1 à 9% du mélange totale selon le degré de durcissement et de la texture recherchée. En effet, plus le pourcentage de la cire augmente, plus le produit fini sera dur. Le mélange est réalisé avec une vitesse d'agitation vitesse comprise entre 40 et 60 tours par minute. Ensuite, le mélange est refroidie lentement à 40°C, par un passage dans un cristalliseur à surface raclé (refroidi à l'eau de robinet) du type commercialisé par la société SIMAC (Italie) sous la référence commerciale GC 5000. La cristallisation commence vers 45°C et il devient à ce moment solide et les acides gras cristallisent. On obtient donc l'huile d'olive tartinable; le produit obtenu peut être conservé à température ambiante pendant au moins une année 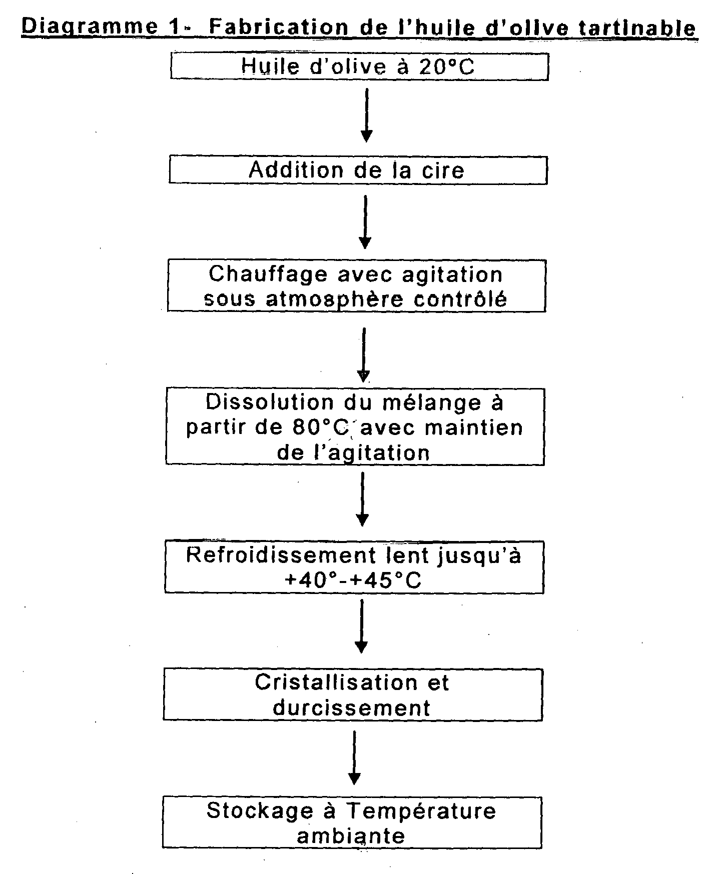
2) Le procédé de fabrication d'émulsion de type margarine à 100% à base huile d'olive vierge des exemples 3 et 4 comprend les étapes suivantes résumées sur le diagramme 2 ci-après.

On prépare une phase grasse comme décrit ci-dessus pour le mélange d'huile d'olive vierge non hydrogénée et de la cire ou mélange de cires auquel on ajoute un agent émulsifiant constitué de lécithine de soja et des mono et diglycérides. Le mélange est chauffé dans un cuiseur du type MX100 commercialisé par la société EBM (Italie) sous atmosphère contrôlée à une température qui varie de 60 à 85°C selon la température de fusion de la cire ou mélange de cires utilisé. La teneur de la cire ou mélange de cires dans le mélange varie de 1 à 9% du mélange totale selon le degré de durcissement et de la texture recherchée alors que la teneur de l'émulsifiant varie de 1 à 2%. Le mélange est réalisé avec une vitesse d'agitation comprise entre 40 à 60 tours par minute. Le liquide ainsi obtenu constitue la phase grasse complète que l'on maintient à l'état liquide à une température un peu inférieur à la température de fusion de la cire ou mélange de cire avant mélange, en pratique environ 60-70°C.

On prépare parallèlement une phase aqueuse peut être seulement l'eau de qualité alimentaire ou du lait écrémé.

Des additifs hydrosoluble tels que: des arômes, des conservateurs, des correcteurs de pH, du sel, des antioxydants, des vitamines etc.... peuvent être rajoutés à la phase aqueuse. Le mélange de la phase aqueuse est porté à une température voisine à celle de la phase grasse soit environ 60-70°C.

La formation de l'émulsion se fait en deux étapes:
- une première étape de l'émulsion, au cours de laquelle la phase grasse complète, maintenue chauffée à environ 60-70°C, et la phase aqueuse (sans la solution de sel) sont additionnées et remuées continuellement pendant 10 minutes. Le mélange est réalisé avec une vitesse d'agitation vitesse comprise entre 150 à 200 tours par minute.
- une seconde étape d'homogénéisation par formation d'une émulsion fine dans laquelle on réalise un malaxage vigoureux. Le mélange est réalisé avec une vitesse d'agitation vitesse comprise entre 1000 à 1200 tours par minute réduisant ainsi la taille des gouttelettes de l'émulsion à une taille de 1 à 10 µm. L'homogénéisation est réalisée dans un une cuve en inox double parois muni d'un agitateur et chauffée à l'eau chaude. Le résultat final est une amélioration de la stabilité du produit. L'émulsion ainsi obtenue est ensuite refroidie jusqu'à la cristallisation dans un cristalliseur à surface raclé. Pour la cristallisation, il est préférable de réduire progressivement la température du mélange pour atteindre la température ambiante, notamment d'au moins 30°C. On obtient donc un produit d'émulsion type margarine à 100% huile d'olive vierge; le produit obtenu peut être conservé à température de 10°C pendant au moins 3 mois.

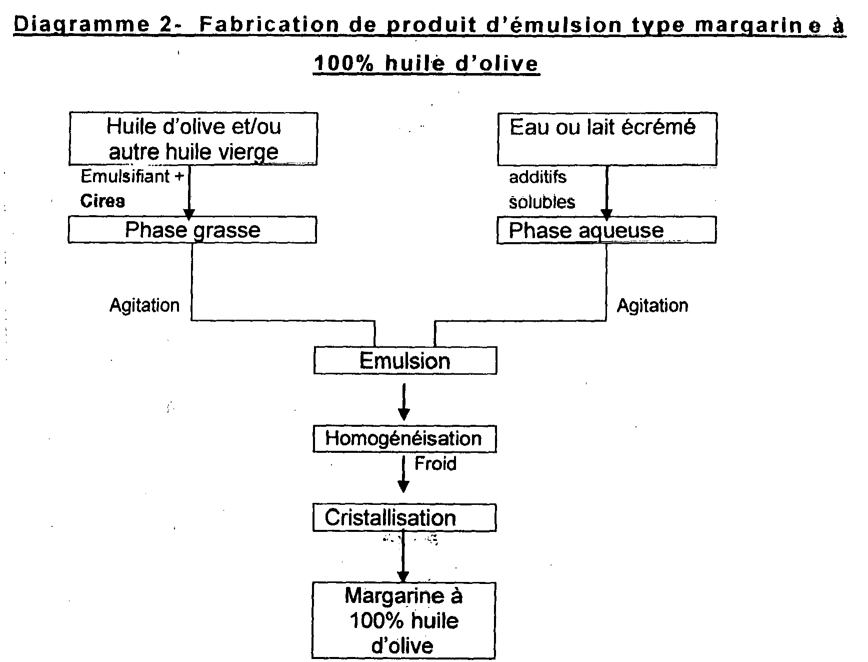

### Exemple 1 : Préparation de bloc solide à base d'huile d'olive.

A 990g d'huile d'olive vierge prélevé au niveau d'une huilerie de la région de Benarous, on ajoute 10g de cire de microcristalline (E905ci) dont les caractéristiques sont décrites ci-dessus et dont le point de fusion moyen est de 85°C. On porte le mélange à une température de fusion de la cire de microcristalline puis on conditionne ledit mélange dans un récipient en verre. Après refroidissement complet et spontané à la température ambiante de 20°C, l'huile d'olive obtenue devient bloc solide et stable.

Pour obtenir une masse d'huile solide pouvant être maintenue stable à une température de 20°C, il convient d'ajouter 20g de cire de microcristalline à 980g d'huile d'olive.

Pour obtenir une masse d'huile solide pouvant être maintenue stable à une température supérieure ou égale à 30°C, il convient d'ajouter entre 30g à 100g de cire de microcristalline à entre 970g à 900g d'huile d'olive. La quantité préférée sera de 40g à 50g de cire de microcristalline à entre 960g à 950g d'huile d'olive pour une température de maintien de l'état solide supérieure ou égale à 30°C.

### Exemple 2: préparation de bloc solide de phase grasse d'huile d'olive.

On remplace dans l'exemple 1, une partie de la cire de microcristalline par la cire de son de riz E908, cire de candelilla E902 et cire d'abeille blanche E901, ou de leur mélange et dont le point de fusion varie de 65°C à 82°C.

A 960g d'huile d'olive, on ajoute 30g de cire de microcristalline, 5g de cire d'abeille blanche, 3g de cire de candelilla et 2g de cire de carnauba. On porte le mélange à la température de fusion des cires ajoutées, soit préférentiellement 85°C puis on conditionne le mélange dans un récipient en verre. Apres refroidissement spontané à température ambiante de 20°C, l'huile d'olive devient bloc solide. On augmente préférentiellement la quantité de la cire de microcristalline, à une valeur de 40g/kg du mélange avec des ajouts de cire d'abeille blanche à 10g, cire de candelilla à 5g et de cire de son de riz à 5g, le reste étant l'huile d'olive 940g. L'objectif de cet ajout de cires est de donner plus de fermeté au bloc solide par conséquent augmenter le point de fusion tout en conservant les qualités sensorielles initiale de l'huile d'olive.

On peut ajouter à l'huile, des arômes, des aromates et des herbes aromatiques.

### Exemple 3: Préparation d'un bloc solide du type margarine tartinable à partir d'huile d'olive.

La phase grasse est constituée par 600 à 700g d'huile d'olive vierge non hydrogénée ainsi que 40 à 60g de cire microcristalline, de préférence 50g de cire microcristalline et d'un agent émulsifiant notamment de 1 à 20g de lécithine de soja, de préférence 10g ainsi que 1g à 10g de mono- et di-glycérides, de préférence 5g et de 1g à 5g d'un mélange de composés antioxydants comprenant du tocophérol et de la beta carotène, de préférence 2g tocophérol et 2g beta carotène. Le mélange de phase grasse et agents émulsifiant et antioxydants est chauffé dans un cuiseur à une température de 85°C pour la dissolution de la cire de microcristalline. Le liquide ainsi obtenu constitue la phase grasse complète.

Une partie de la cire microcristalline peut être optionnellement substituée par la cire d'abeille blanche et/ou de la cire de candelilla ou de leurs mélanges. Dans ce cas la température est adaptée au point de fusion du mélange.

De préférence, on ajoute à l'huile d'olive, 40g de cire microcristalline, 8g de cire d'abeille blanche et 5g de cire de candelilla par kg de corps gras.

La phase grasse est maintenue à une température dans laquelle elle est maintenue liquide en pratique à une température de 60 à 70°C

La phase aqueuse peut être seulement l'eau de qualité alimentaire ou de préférence le lait écrémé en quantité de 300g. Des additifs hydrosoluble sont ajoutés dans la phase aqueuse tels que: 2g de gomme xanthane ou carraghénane comme agent épaississant (L'épaississant rendant l'eau sous forme de gel à froid), 1g d'arôme, 1 g de sorbate de potassium et 0.2g d'acide citrique à titre d'agents conservateurs et 0.5g d'acide ascorbique à titre d'agent antioxydant. Le mélange est porté à une température voisine à celle de la phase grasse.

La formation de l'émulsion se fait en deux étapes:
- Pendant la première étape de l'émulsion, 700g de la phase grasse maintenue chauffée à 60 - 70°C et 300g de la phase aqueuse sont additionnées et remuées continuellement pendant 10 minutes.
- Pour l'homogénéisation par formation de l'émulsion fine à la seconde étape, on réalise un malaxage vigoureux, réduisant la taille des gouttelettes de l'émulsion, la taille des gouttelettes étant de 1 à 10 µm.

L'émulsion ainsi obtenue est refroidie jusqu'à la cristallisation dans un cristalliseur à surface raclé. Pour la cristallisation, il est nécessaire d'observer des températures d'au moins 20°C.

On obtient donc une margarine à 100% huile d'olive vierge sous forme de bloc solide tartinable; le produit obtenu peut être conservé à température de 10°C pendant au moins 3 mois.

### Exemple 4 : Préparation de bloc solide d'olive à tartiner du type tapenade à base d'émulsion d'huile d'olive.

A 135g d'huile d'olive vierge, on ajoute 3 à 8g, de préférence 5g de cire de microcristalline, et de 2 à 5g de préférence 3g d'émulsifiant E471 ou lécithine de soja. On porte le mélange à une température de fusion de la cire de microcristalline, puis on conditionne ledit mélange dans un récipient maintenu à une température de 60-70°C.

Une partie de la microcristalline peut être optionnellement substituée par la cire d'abeille blanche ou la cire de candelilla ou de leurs mélanges. De préférence on ajoute à l'huile d'olive, 5g de cire microcristalline, 1g cire d'abeille blanche et 0.5g cire de candelilla par kg de corps gras. On porte le mélange à 85°C pour dissolution des ingrédients puis on le maintien à l'état liquide à 60-70°C.

Parallèlement, on mixe finement 100g câpres non égouttés et 100g d'olives vertes ou noir dénoyautées, déjà en morceaux et 10g de jus de citron et 10g d'ail dans un découpeur (« cutter ») du type Blender Moulinette commercialisé par la société Moulinex (France), pour obtenir une pâte fine contenant des morceaux de taille de 0.1 à 0.2 mm.

On ajoute au mélange ci-dessus 600 g d'olives restantes et 50g de semi conserve d'anchois non salé et étêté. On actionne à nouveau le cutter pendant 2 minutes, il s'agit ici de ne surtout pas réaliser une pâte trop fine mais de conserver des fragments d'olives de tailles d'au moins 1 mm et pas plus de 2mm, lesquels plus tard donneront du croquant à la préparation.

On réalise ainsi une pâte en réalisant le mixe dans le cutter sans la phase grasse puis on mélange le mixe avec la phase grasse.

Du fait de l'eau contenue dans les olives la pâte ci-dessus constitue une phase aqueuse épaisse après broyage. Les anchois étant imprégnés d'huile d'olive apportent toutefois un peu d'huile d'olive avec laquelle commence l'émulsion.

Quand la pâte aqueuse est homogène, on lui ajoute en mélange la dite phase grasse constituée du mélange huile d'olive et cire(s) maintenu à chaud par petits filets jusqu'à ce que on obtient à chaud une pate de type tapenade croquante et homogène.

Après refroidissement complet et spontané à la température ambiante de 20°C, la tapenade devient un bloc solide homogène, uniforme et tartinable dépourvue d'un anneau surnageant d'huile d'olive.

### Exemple 5 : Préparation d'un bloc solide à base d'huile d'olive de type Pesto.

A 440g d'huile d'olive vierge, on ajoute entre 10g à 15g de préférence 13g de cire de microcristalline et de 6 à 12g de préférence 8g d'émulsifiant E471 ou lécithine de soja. On porte le mélange à une température de fusion de la cire de microcristalline puis on conditionne ledit mélange dans un récipient maintenu à une température de 60-70°C.

Une partie de la cire microcristalline peut être optionnellement substituée par la cire d'abeille blanche ou la cire de candelilla ou de leurs mélanges. De préférence on ajoute à l'huile d'olive, 10g de cire microcristalline, 1g cire d'abeille blanche et 0.5g cire de candelilla par kg de corps gras. On porte le mélange à 85°C pour dissolution des ingrédients puis on le maintien à l'état liquide à 60-70°C.

Dans le bol d'un cutter à viande on place 300g de feuilles de basilic fraiche, 150g de fromage râpé Parmesan, 10g d'acide ascorbique, 40g de pignon, 10g de sel, 20g de lactosérum en poudre, 20g de dextrose et 10g d'ail. Le mélange est mixé finement pendant 2 à 4 minutes jusqu'à obtention d'une pâte fine et lisse. Quand la pâte est homogène, on ajoute la phase grasse constituée du mélange d'huile d'olive et de cire(s) maintenu à chaud par petits filets jusqu'à ce que on obtient à chaud une pâte lisse et homogène de type pesto.

Après refroidissement complet et spontané à la température ambiante de 20°C, le pesto devient un bloc solide compacte homogène et uniforme dépourvue d'un anneau surnagent d'huile d'olive.

L'innovation dans ce produit consiste en une nouvelle texture du pesto. En effet la texture du pesto classique se présente en deux phases, une phase solide surmontée par un surnageant huileux. Le nouveau pesto se compose d'une seule phase solide et homogène.

### Exemple 6: bloc solide de chocolat à tartiner.

A 230g d'huile d'olive, on ajoute 4.6 à 11.5g, de préférence 6.9g de cire de microcristalline, et de 2.3 à 9.2g de préférence 4.6g d'émulsifiant E471 ou lécithine de soja. On porte le mélange à une température de fusion de la cire de microcristalline puis on conditionne ledit mélange dans un récipient maintenu à une température de 60-70°C.

Une partie de la cire microcristalline peut être optionnellement substituée par de la cire d'abeille blanche ou de la cire de candallila ou de leurs mélanges. De préférence on ajoute à l'huile d'olive, 3.9g de cire microcristalline, 1g cire d'abeille blanche et 1g cire de candelilla par kg de corps gras. On porte le mélange à 85°C pour dissolution des ingrédients puis on maintient cette phase grasse à l'état liquide à 60-70°C.

Parallèlement, on prépare une phase poudreuse déshydratée dans un récipient on ajoute, de 70 à 150g de préférence 100g de cacao en poudre, et de 300 à 500g de préférence 400g de sucre glacé, et entre 100 à 180g de préférence 150g de lait en poudre écrémé. On mixe le mélange.

La phase grasse et la phase poudreuse déshydratée sont additionnées et remuées continuellement pendant 10 minutes pour favoriser l'émulsion. L'émulsion ainsi obtenue est raffinée dans un broyeur à billes de type DCM 250 Ball Mixer commercialisé par la société Demsa (Turquie) pendant 4h à une température de 45-50°C Puis elle est conditionnée à chaud dans des pots en verre.

Après refroidissement complet et spontané à la température ambiante de 20°C, on obtient un bloc solide de chocolat à tartiner, compacte et homogène.

### Références bibliographiques

(1) :- Lichtenstein A. H., Erkkil A. T., Lamarche B., Schwab U. S., Jalbert S. M., Lynne M. A. (2003). Influence of hydrogenated fat and butter on CVD risk factors: remnant-like particles, glucose and insulin, blood pressure and C-reactive protein. Atherosclerosis ,171, 97-107.
(2): Kris-Etherton P.M., Derr J., Mitchell D. C., Mustad V.A., Russell M. E., McDonnell E. T., Salabsky D., Pearson T.A. (1993). The Role of Fatty Acid Saturation on Plasma Lipids, Lipoproteins, and Apolipoproteins: I. Effects of Whole Food Diets High in Cocoa Butter, Olive Oil, Soybean Oil, Dairy Butter, and Milk Chocolate on the Plasma Lipids of Young Men. Metabolism, 42, 121-129.
(3): Ascherio A., Katan M. B., Zock P. L., Stampfer M. J., Willett W. C. (1999). Trans fatty acids and coronary heart disease. The New England journal of medicine., 25, 1994-1998.
(4) : Chene C. (2007). Agro Jonction - Les Matières Grasses, 41, 6 - 9.
(5): Clandinin M. T., Foxwell A., Goh Y.K., Layne K.,. Jumpsen J. A. (1997). Omega-3 fatty acid intake results in a relationship between the fatty acid composition of LDL cholesterol ester and LDL cholesterol content in humans. Biochimica et Biophysica Acta, 1346, 247-252.
(6): Roche H.M., Gibney M.J., Kafatos A., Zampelas A., Williams C.M. (2000). Beneficial properties of olive oil. Food Research International ,33, 227-231.
(7): Norris S. (2005). Les gras trans, fardeau pour la santé. Parliamentary information and research service. 1-9.
(8): Lockheart M. S.K, Lyn M. S., Hege M. R., Ragnhild L. F., Jetmund R., Dag S. T., Jan I. Pedersen J.I., David R. Jacobs Jr. (2007). Dietary patterns, food groups and myocardial infarction: a case-control study. British Journal of Nutrition, 98, 380-387.

## Revendications

1. Produit alimentaire solide tartinable comprenant une phase grasse fluide constituée d'huile non hydrogénée et non inter-estérifiée comprenant au moins 75%, de préférence au moins 85% d'acides gras insaturés, de préférence en C16-C20, en mélange avec au moins une cire minérale microcristalline dans une proportion pondérale d'au moins 1%, de préférence au moins 3% dans ladite phase grasse.

2. Produit alimentaire solide tartinable selon la revendication 1, **caractérisé en ce que** ladite phase grasse comprend desdits acides gras insaturés en C16 à C20, comprenant plus de 55% d'acide gras choisis parmi les acides oléique, linoléique et linolénique, de préférence au moins 55% d'acide oléique, au moins 10% d'acide linoléique, et au moins 0.5% d'acide linolénique.

3. Produit alimentaire solide tartinable selon la revendication 1 ou 2, **caractérisé en ce que** ladite huile est une huile végétale choisie parmi les huile d'olive, huile de tournesol, huile d'avocat, huile de colza, huile de noisette, huile de noix, huile de carthame, huile de lin et huile de germes de blé.

4. Produit alimentaire solide tartinable selon la revendication 3, **caractérisé en ce que** ladite huile est une huile d'olive, de préférence vierge.

5. Produit alimentaire solide tartinable selon l'une des revendications 1 à 4, **caractérisé en ce que** ladite phase grasse comprend une dite cire ou mélange de cires dans une proportion pondérale de 1 à 15%, de préférence de 2 à 10%.

6. Produit alimentaire solide tartinable selon l'une des revendications 1 à 5, **caractérisé en ce que** ladite phase grasse comprend une dite cire minérale en mélange avec une cire végétale ou animale choisie parmi les cire d'abeilles, le dit mélange de cires comprenant au moins 50% en poids de dite cire minérale ou fossile, de préférence au moins 2/3 de dite cire minérale.

7. Produit alimentaire solide tartinable selon la revendication 6, **caractérisé en ce que** ladite cire végétale ou animale est choisie parmi les cire d'abeille, de préférence cire d'abeille blanche, cire de candelilla, cire de son de riz et cire de carnauba.

8. Produit alimentaire solide tartinable selon l'une des revendications 1 à 7, **caractérisé en ce qu'**il est constitué essentiellement d'une ladite phase grasse comprenant les proportions pondérales de :
- 90% à 99% de dite huile, de préférence de 95 à 99%,
- 1% à 10% de cire(s), de préférence de 1 à 7%, et
- 0 à 3% d'additifs lipophiles divers comprenant notamment un composé antioxydant tel que tocophérol et béta carotène.

9. Produit alimentaire solide tartinable selon l'une des revendications 1 à 7, **caractérisé en ce qu'**il comprend une émulsion d'une phase aqueuse dans une dite phase grasse en mélange avec un agent émulsifiant, de préférence choisi parmi la lécithine de soja et des mono et di-glycérides.

10. Produit alimentaire solide tartinable selon la revendication 9, **caractérisé en ce qu'**il comprend une phase grasse comprenant les proportions pondérales de :
- 70-95% de dite huile, et
- 3 à 15 % de préférence 5 à 10% de dite(s) cire(s), et
- 1 à 5 % d'agent émulsifiant.

11. Produit alimentaire solide tartinable selon la revendication 10, **caractérisé en ce que** ladite émulsion sous forme de blocs solides de type margarine comprend en proportions pondérales:
70% à 80% de la dite huile,
5 à 10%de dite(s) cire(s), et
1 à 5% d'agent émulsifiant, et
15% à 40 %, de préférence de 15 à 25% de la dite phase aqueuse comprenant de 0 à 5% d'agent épaississant.

12. Produit alimentaire solide tartinable selon l'une des revendications 10 à 11, **caractérisé en ce que** ledit produit est un bloc solide, ladite phase aqueuse comprenant des morceaux broyés de produits comestibles de préférence de taille inférieure à 2mm, tel que fruits et/ou légumes et/ou de la poudre de produits comestibles tels que condiments ou lait.

13. Produit alimentaire solide tartinable selon la revendication 12, **caractérisé en ce que** ledit produit est du type tapenade, ladite phase aqueuse comprenant des morceaux broyés d'olives et de préférence câpre, anchois, ail et du jus de citron.

14. Produit alimentaire solide tartinable selon la revendication 12, **caractérisé en ce que** ledit produit est du type pesto et ladite phase aqueuse comprend des morceaux broyés de feuilles d'herbes aromatiques telles que feuilles fraiches de basilic, ainsi que des morceaux broyés de fromage, pignon et ail.

15. Produit alimentaire solide tartinable selon l'une des revendications 8 à 11, **caractérisé en ce que** ledit produit est du type bloc solide de chocolat comprenant une dite phase grasse avec un mélange de poudres alimentaires et de préférence de lécithine de soja, le mélange de poudres alimentaires comprenant de la poudre de cacao, du sucre glacé, et de la poudre de lait écrémé ou lactosérum en poudre, et poudre de dextrose.

## Patentansprüche

1. Festes streichfähiges Lebensmittelprodukt, umfassend eine fluide Fettphase, die von einem nicht hydrierten und nicht gegenseitig veresterten Öl gebildet ist, umfassend mindestens 75 %, vorzugsweise mindestens 85 % ungesättigte Fettsäuren, vorzugsweise C16-C20, im Gemisch mit mindestens einem mikrokristallinen mineralischen Wachs in einem Gewichtsverhältnis von mindestens 1 %, vorzugsweise mindestens 3 % in der Fettphase.

2. Festes streichfähiges Lebensmittelprodukt nach Anspruch 1, **dadurch gekennzeichnet, dass** die Fettphase ungesättigte Fettsäuren C16 bis C20 umfasst, umfassend mehr als 55 % Fettsäure, ausgewählt unter den Olein-, Linolein- und Linolensäuren, vorzugsweise mindestens 55 % Oleinsäure, mindestens 10 % Linoleinsäure und mindestens 0,5 % Linolensäure.

3. Festes streichfähiges Lebensmittelprodukt nach Anspruch 1 oder 2, **dadurch gekennzeichnet, dass** das Öl ein Pflanzenöl ist, ausgewählt unter Olivenöl, Sonnenblumenöl, Avocadoöl, Rapsöl, Haselnussöl, Nussöl, Distelöl, Leinöl und Weizenkeimöl.

4. Festes streichfähiges Lebensmittelprodukt nach Anspruch 3, **dadurch gekennzeichnet, dass** das Öl ein Olivenöl, vorzugsweise ein natives Olivenöl, ist.

5. Festes streichfähiges Lebensmittelprodukt nach einem der Ansprüche 1 bis 4, **dadurch gekennzeichnet, dass** die Fettphase ein Wachs oder ein Gemisch von Wachsen in einem Gewichtsverhältnis von 1 bis 15 %, vorzugsweise von 2 bis 10 %, umfasst.

6. Festes streichfähiges Lebensmittelprodukt nach einem der Ansprüche 1 bis 5, **dadurch gekennzeichnet, dass** die Fettphase ein mineralisches Wachse im Gemisch mit einem pflanzlichen oder tierischen Wachs umfasst, ausgewählt unter den Bienenwachsen, wobei das Wachsgemisch mindestens 50 Gew.-% eines mineralischen oder fossilen Wachses, vorzugsweise mindestens 2/3 eines mineralischen Wachses, umfasst.

7. Festes streichfähiges Lebensmittelprodukt nach Anspruch 6, **dadurch gekennzeichnet, dass** das pflanzliche oder tierische Wachs unter den Bienenwachsen ausgewählt ist, vorzugsweise dem weißen Bienenwachs, dem Candelillawachs, dem Reiskleiewachs und dem Carnaubawachs.

8. Festes streichfähiges Lebensmittelprodukt nach einem der Ansprüche 1 bis 7, **dadurch gekennzeichnet, dass** es im Wesentlichen von einer Fettphase gebildet ist, umfassend die folgenden Gewichtsverhältnisse:
- 90 % bis 99 % eines Öls, vorzugsweise 95 % bis 99 %,
- 1 % bis 10 % von Wachs(en), vorzugsweise 1 % bis 7 %, und
- 0 % bis 3 % von diversen lipophilen Zusatzstoffen, umfassend insbesondere eine antioxidative Verbindung, wie Tocopherol und Beta-Karotin.

9. Festes streichfähiges Lebensmittelprodukt nach einem der Ansprüche 1 bis 7, **dadurch gekennzeichnet, dass** es eine Emulsion einer wässerigen Phase in einer Fettphase im Gemisch mit einem Emulgator umfasst, der vorzugsweise unter Sojalecithin und Mono-Diglyceriden ausgewählt ist.

10. Festes streichfähiges Lebensmittelprodukt nach Anspruch 9, **dadurch gekennzeichnet, dass** es eine Fettphase umfasst, umfassend die folgenden Gewichtsverhältnisse:
- 70 % bis 95 % Öl, und
- 3 % bis 15 %, vorzugsweise 5 % bis 10 % von Wachs(en), und
- 1 % bis 5 % eines Emulgators.

11. Festes streichfähiges Lebensmittelprodukt nach Anspruch 10, **dadurch gekennzeichnet, dass** die Emulsion in Form von festen Blöcken vom Typ Margarine die folgenden Gewichtsverhältnisse umfasst:
- 70 % bis 80 % Öl,
- 5 % bis 10 % von Wachs(en), und
- 1 % bis 5 % eines Emulgators, und
- 15 % bis 40 %, vorzugsweise 15 % bis 25 % der wässerigen Phase, umfassend 0 % bis 5 % eines Verdickungsmittels.

12. Festes streichfähiges Lebensmittelprodukt nach einem der Ansprüche 10 bis 11, **dadurch gekennzeichnet, dass** das Produkt ein fester Block ist, wobei die wässerige Phase zerkleinerte Stücke von essbaren Produkten mit einer Größe von vorzugsweise unter 2 mm umfasst, wie Obst und/oder Gemüse und/oder Pulver von essbaren Produkten, wie Gewürze oder Milch.

13. Festes streichfähiges Lebensmittelprodukt nach Anspruch 12, **dadurch gekennzeichnet, dass** das Produkt vom Typ Olivenpaste ist, wobei die wässerige Phase zerkleinerte Stücke von Oliven und vorzugsweise Kapern, Anchovis, Knoblauch und Zitronensaft umfasst.

14. Festes streichfähiges Lebensmittelprodukt nach Anspruch 12, **dadurch gekennzeichnet, dass** das Produkt vom Typ Pesto ist, und die wässerige Phase zerkleinerte Stücke von Blättern von aromatischen Kräutern, wie frische Basilikumblätter, sowie zerkleinerte Stücke von Käse, Pignoli und Knoblauch umfasst.

15. Festes streichfähiges Lebensmittelprodukt nach einem der Ansprüche 8 bis 11, **dadurch gekennzeichnet, dass** das Produkt vom Typ fester Schokoladeblock ist, umfassend eine Fettphase mit einem Gemisch von Lebensmittelpulvern und vorzugsweise Sojalecithin, wobei das Gemisch von Lebensmittelpulvern Kakaopulver, Staubzucker und Pulver von entrahmter Milch oder pulverförmiges Lactoserum und Dextrosepulver umfasst.

## Claims

1. A spreadable, solid food product comprising a fluid fatty phase formed of non-hydrogenated and non-interesterified oil comprising at least 75 %, preferably at least 85 % of unsaturated fatty acids, preferably C16-C20, in a mixture with at least one microcrystalline mineral wax in a weight proportion of at least 1 %, preferably at least 3 % in said fatty phase.

2. The spreadable, solid food product according to claim 1, **characterized in that** said fatty phase comprises said C16-C20 unsaturated fatty acids, and comprises more than 55 % of fatty acids selected from among oleic, linoleic and linolenic acids, preferably at least 55 % oleic acid, at least 10 % linoleic acid and at least 0.5 % linolenic acid.

3. The spreadable, solid food product according to claim 1 or 2, **characterized in that** said oil is a vegetable oil selected from among olive oil, sunflower seed oil, avocado oil, rapeseed oil, hazelnut oil, walnut oil, safflower oil, linseed oil and wheatgerm oil.

4. The spreadable, solid food product according to claim 3, **characterized in that** said oil is olive oil, preferably virgin oil.

5. The spreadable, solid food product according to one of claims 1 to 4, **characterized in that** said fatty phase comprises said wax or mixture of waxes in a weight proportion of 1 to 15 %, preferably 2 to 10 %.

6. The spreadable, solid food product according to one of claims 1 to 5, **characterized in that** said fatty phase comprises said mineral wax in a mixture with a vegetable or animal wax selected from among beeswaxes, said mixture of waxes comprising at least 50 % by weight of said mineral or fossil wax, preferably at least 2/3 of said mineral wax.

7. The spreadable, solid food product according to claim 6, **characterized in that** said vegetable or animal wax is selected from among beeswaxes, preferably white beeswax, candelilla wax, rice bran wax and carnauba wax.

8. The spreadable, solid food product according to one of claims 1 to 7, **characterized in that** it is essentially formed of said fatty phase having the weight proportions of:
- 90 % to 99 % of said oil, preferably 95 to 99 %;
- 1 % to 10 % of wax(es), preferably 1 to 7 %; and
- 0 to 3 % of various lipophilic additives particularly comprising an antioxidant compound such as tocopherol and beta carotene.

9. The spreadable, solid food product according to one of claims 1 to 7, **characterized in that** it comprises an emulsion of an aqueous phase in said fatty phase in a mixture with an emulsifying agent, preferably selected from among soy lecithin and mono- and di-glycerides.

10. The spreadable, solid food product according to claim 9, **characterized in that** it comprises a fatty phase comprising the weight proportions of:
- 70-95 % of said oil, and
- 3 to 15 %, preferably 5 to 10 % of said wax(es), and
- 1 to 5 % of emulsifying agent.

11. The spreadable, solid food product according to claim 10, **characterized in that** said emulsion in the form of margarine-type solid blocks comprises in weight proportions:
- 70 % to 80% of said oil
- 5 % to 10 % of said wax(es), and
- 1 to 5 % of emulsifying agent, and
- 15 % to 40 %, preferably 15 to 25 % of said aqueous phase comprising 0 to 5 % thickening agent.

12. The spreadable, solid food product according to one of claims 10 to 11, **characterized in that** said product is a solid block, said aqueous phase comprising ground pieces of edible products preferably of size smaller than 2 mm, such as fruit and/or vegetables and/or a powder of edible products such as condiments or milk.

13. The spreadable, solid food product according to claim 12, **characterized in that** said product is of tapenade type, said aqueous phase comprising ground pieces of olives and preferably capers, anchovies, garlic and lemon juice.

14. The spreadable, solid food product according to claim 12, **characterized in that** said product is of pesto type and said aqueous phase comprises ground pieces of aromatic herb leaves such as fresh basil leaves, and ground pieces of cheese, pine-nut and garlic.

15. The spreadable, solid food product according to one of claims 8 to 11, **characterized in that** said product is of the type of a solid block of chocolate comprising said fatty phase with a mixture of food powders and preferably soy lecithin, the mixture of food powders comprising cocoa powder, icing sugar, skimmed milk powder or whey powder, and dextrose powder.
